# EUROPEAN PATENT SPECIFICATION

(11) **EP 3 021 415 B1**
(45) Date of publication and mention of the grant of the patent: **17.05.2017**
(21) Application number: 15003161.5
(22) Date of filing: 04.11.2015
(51) Int. Cl.: H01M 10/08, H01M 10/10

(54) **ADDITIVE FOR ELECTROLYTE OF LEAD-ACID BATTERIES**
ADDITIV FÜR ELEKTROLYT VON BLEIBATTERIEN
ADDITIF POUR ÉLECTROLYTE DE BATTERIE AU PLOMB

(30) Priority: 13.11.2014 IT MI20141961
(43) Date of publication of application: 18.05.2016
(73) Proprietor: FIAMM Energy Technology S.p.A., 36075 Montecchio Maggiore (VI) (IT)
(72) Inventor: Bortolamei, Nicola, 36075 Montecchio Maggiore (VI) (IT); Cazzanti, Silvia, 36075 Montecchio Maggiore (VI) (IT); Kapkov, Nikola, 36075 Montecchio Maggiore (VI) (IT); Restello, Silvio, 36075 Montecchio Maggiore (VI) (IT); Asai, Kenji, 36075 Montecchio Maggiore (VI) (IT)
(74) Representative: Lecce, Giovanni

(56) References cited:
- CN-A- 101 685 884
- JP-A- 2006 185 743
- JP-A- 2007 250 308

## Description

This invention relates to an additive for electrolyte of lead-acid batteries, according to claim 1.

More particularly, this invention relates to an additive for electrolyte solutions of lead-acid batteries of technology known as flooded or VRLA (Valve Regulated lead-acid batteries) with AGM (Absorbed Glass Mat) technology, for applications in the industrial and automotive sector that require very severe cyclical and power performance. This second type of lead-acid accumulator, which spread in parallel with the development of hybrid-power motor vehicles, provides greater cyclability and life of the battery and therefore lends itself to be advantageously used in the automotive sector. In fact, in hybrid technology, functions such as stop & start or the recovery of braking energy require high battery performance both in terms of repeated starts, and thus cyclability, and in terms of charge acceptance.

The evolution in the field of the automotive industry has led, in recent times, to a significant and greater exploitation of the performance of traditional lead-acid batteries, which no longer exclusively perform the function of starting the engine.

In fact, from the point of view of the so-called sustainable mobility and the reduction of harmful emissions, today we are seeing an ever wider diffusion of vehicles equipped with hybrid technology, also thanks to the state purchase incentive promoted by some countries; such vehicles, from the simplest grade related to the sole "stop & start" function to that of the more complex "full hybrid" that allows using only the electric drive motor for short distances, therefore require the use of better performing batteries; these latter were thus developed to provided, in the first place, a high number of starting cycles of the vehicle in the classic stop & start function. The evolution of said batteries also regarded other aspects, such as the possibility of ensuring their fast and efficient rechargeability in order to recover energy during braking of the vehicle and the ability to withstand deep-intensity discharge cycles to provide services on-board the vehicle when the engine turns of in stop phases, for example at traffic lights.

Even a wider sector, not limited to the automotive sector, namely that of industrial applications in general such as, for example, the photovoltaic market associated with storage, resulted in the demand for storage systems with high discharge capacity, even at low states of charge (10-30% SOC) and recharge. Also in these applications, the major requirements of deep cycling required overlap with the need to, in any case, maintain current discharge performance at high intensities. In both sectors, automotive and industrial applications, the battery is therefore required to not lose the ability to recharge efficiently: in high-depth discharge cycles, the most common phenomena that lead to degradation of the batteries and, consequently to loss of performance, are stratification of the electrolyte and the inability of the plate or positive electrode fully recharge, so as to progressively lose capacity in subsequent cycles.

During the charge and discharge cycles, especially with high discharge depth, the sulphuric acid based electrolyte tends to stratify in the battery, concentrating itself on the bottom of the container and remaining, instead, more diluted at the highest part. This phenomenon induces a non-uniform use of the plates or electrodes, which, correspondingly, tend to be over-used in the upper part and under-used in the lower; this leads to the progressive deterioration of the battery, with consequent premature loss of cycling performance.

From JP 2006185743, a solution is known that tends to decrease the stratification of the electrolyte by adding to it materials based on SiO₂ (silicon dioxide, commonly silica) and aluminium ions; this improves the recharging capacity of the VRLA lead-acid batteries intended for applications in which charge and discharge cycles with high discharge depth are required. The cited Japanese patent claims, in particular, a composition of additives for electrolyte based on sulphuric acid 1.300 kg/L at 25 °C in which are present:
- SiO₂ between 0.108 mol/L and 1.081 mol/L and
- Al³⁺ ions between 0.0190 mol/L and 1.081 mol/L.

Similarly, JP 2007 250308 claims a composition of additives with:
- SiO2 between 0.108 mol/L and 1.081 mol/L and
- Al3+ ions between 0.0252 mol/L and 0.201 mol/L.

However, both of these solutions have a major disadvantage. In fact, if on one hand the compositions of additives induce an improvement in the recharge capacity of the battery, on the other hand, they can cause a loss of the starting performance typical of automotive applications. More in detail, the addition of these additives causes a partial gelation of the electrolyte based on sulphuric acid, resulting in a homogeneous distribution of the sulphate ions in the volume occupied by the electrolyte itself in the battery and thus forming a barrier to stratification. While, the partial gelation of the electrolyte implies a slowdown in the speed of diffusion of the acid, with the result that, in terms of performance, one sees a loss of the capacity of the battery and its starting performance; in practice, the battery may not be functionally adequate for applications in which such performance is required, as precisely in the automotive sector. Chinese patent No. CN 101 685 884 concerns an additive for electrolyte solutions of lead-acid batteries, consisting of a composition that comprises micro-particles of silicon dioxide, aluminium, alkaline or alkaline earth metal and aqueous solution of sulphuric acid; the disadvantages of this solution are the same indicated in relation to the two Japanese patents discussed above, especially with reference to the partial gelation of the electrolyte and consequent formation of a barrier to stratification.

The purpose of this invention is to overcome the drawbacks listed above.

More particularly, the purpose of this invention is to provide an additive for electrolyte solutions of lead-acid batteries that ensures adequate performance at high discharge performance under high current regimes, typical in particular in the sector or of automotive applications.

A further purpose of the invention is to provide an additive as defined above whose composition is able to prevent the phenomena of stratification of the electrolyte, thus enabling uniform use of the active masses distributed over the entire surface of the plates.

Another object of the invention is to provide an additive as a composition of additives for lead-acid electrolyte that allows an efficient recharge capacity of the plates during the cyclical life of the battery, ensuring it a long cyclic life. A further purpose of the invention is to provide an additive suitable to allow an efficient recovery of battery capacity even after a deep discharge.

A further purpose of the invention is to provide an additive for electrolyte that may be used for both flooded battery and VRLA AGM technology.

These and still other purposes are achieved for electrolyte solutions of lead-acid batteries by this invention according to the main claim.

The constructive and functional characteristics of the additive for electrolyte solutions of lead-acid batteries of this invention will be better understood from the detailed description that follows, in which reference is made to the accompanying drawings that that reproduce as many tables. Therefore:
Figure 1 shows a table of the different concentrations in Mol/L of the SiO₂ and aluminium ion additives tested;
Figure 2 illustrates a table of the response voltages of the batteries with the electrolyte composition of the above table, after 10 seconds of discharge at the current to 760 A at the temperature of -18 °C;
Figure 3 shows a table relating to the number of charge and discharge cycles performed by the batteries according to the table of Figure 1.

According to the invention, with reference to the tests carried out by the Applicant and reported below, a preferred composition of additives for electrolyte with a content of individual additives expressed in mol/L is as follows:
- 0.030 mol/L - 0.100 mol/L of SiO₂,
- 0.015 mol/L - 0.100 mol/L of Al³⁺ aluminium ions, in the form, by way of non-limiting example, of Al₂(SO₄)₃ or AlK(SO₄)₂,
- metals of the alkaline or alkaline earth class,
- and the remaining part composed of an aqueous solution of sulphuric acid.

As stated, SiO₂ has the function of inducing a partial gelation of the electrolyte, preventing stratification and thus preventing the deposition of sulphate ions on the bottom of the battery, while the aluminium, sodium or lithium ions ensure a good recharging efficiency, in particular conditions of deep discharge.

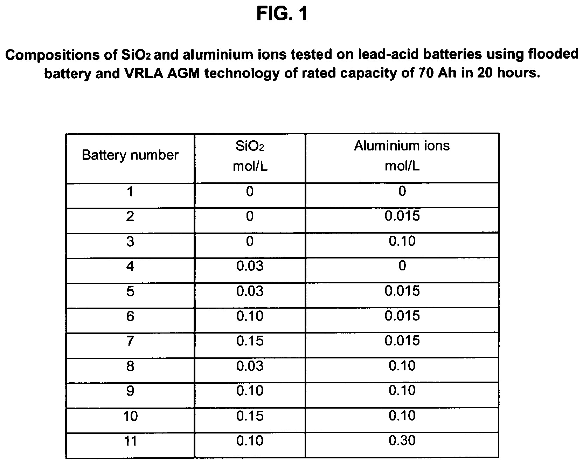

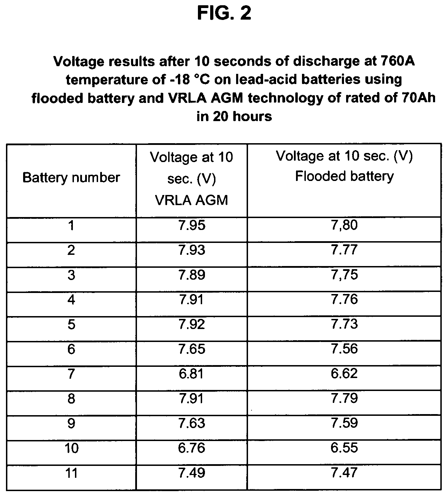

According to the experimental tests conducted, lead-acid batteries were prepared using both flood battery and VRLA with AGM technology with a rated capacity of 70 Ah in 20 hours. These batteries were then formed electrochemically with the addition of sulphuric acid based electrolyte containing a fixed quantity of between 0.050 and 0.30 mol/L of alkaline or alkaline earth metal and a variable amount of SiO₂ and aluminium ions according to the table of Figure 1. Once filled with the electrolytic solution and formed electrochemically, the batteries were placed in a cooling chamber, with air circulation at a temperature of -18 °C for 24 hours. Then, the same batteries were discharged with the cold-cranking current defined for the batteries (760 A) and their voltages after 10 seconds of discharge were recorded; the table of Figure 2 illustrates the results obtained. From it one can see that increasing the quantity of SiO₂ above 0.10 mol/L induces a significant decrease of the battery voltage after 10 seconds of discharge at the current of 760 A and at the temperature of -18 °C, such as to make the battery unsuitable for starting vehicles, and thus for automotive applications with particular reference to hybrids.

At the end of the discharge, the above batteries were subjected to a test of successive charge and discharge cycles according to the following profile:
- Discharge at 5xC₂₀ up to 10.2 V;
- Recharging at a voltage of 14.4 V with a maximum current of 5xC₂₀ for 12 hours.

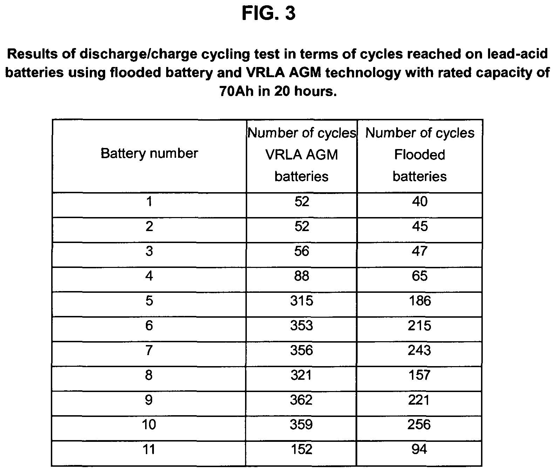

The above cycles were repeated until the capacity delivered by the battery in the discharge step dropped below 70% of its nominal value (70 Ah). The table of Figure 3 illustrates the results obtained from the different batteries in terms of cycles executed. From it one can see that, in the absence of additives based on SiO₂ and aluminium ions, the number of cycles executed with discharged capacity exceeding 49 Ah (70% of the nominal value of 70 Ah) is very low. Moreover, even when the quantity of aluminium ions increases beyond 0.10 mol/L, the number of cycles passed with discharged capacity exceeding 49 Ah does not increase substantially. The batteries No. 7 according to the table of Figure 1, with a composition containing 0.15 mol/L of SiO₂ and 0.015 mol/L of aluminium ions, performed a very high number of cycles but, from a further comparison with the table of figure 2, one finds that such batteries show poor performance in discharging at 760 A; this led to the belief that an appropriate balance in the composition of the two additives could ensure excellent performance, both in cycling tests and discharge at high current regimes. The further experiments carried out by the applicant starting from this base, with the addition of a part of alkaline or alkaline earth metal, surprisingly allowed finding a composition capable of ensuring an adequate response of batteries using flooded and VRLA AGM technology, both in power discharges and cyclic life performance. This composition identified advantageously comprises:
- 0.010 mol/L - 0.100 mol/L of SiO₂,
- 0.010 mol/L - 0.100 mol/L of Al³⁺ aluminium ions,
- 0.050 mol/L - 0.300 mol/L of alkaline or alkaline earth metal (by way of non-limiting example, metals such as Na₂SO₄ or Li₂SO₄),
- and the remaining part composed of an aqueous solution of sulphuric acid.

Preferably, the percentages of the components are the following:
- 0.030 mol/L - 0.100 mol/L of SiO₂,
- 0.015 mol/L - 0.100 mol/L of Al³⁺ aluminium ions,
- 0.050 mol/L - 0.300 mol/L of alkaline or alkaline earth metal (by way of non-limiting example, metals such as Na₂SO₄ or Li₂SO₄),
- and the remaining part composed of an aqueous solution of sulphuric acid.

An additive for electrolyte solutions of lead-acid batteries having a similar composition allows, as tested by the Applicant, meeting needs related to the fact of a uniform use of the active masses distributed over the entire surface of the plates, an efficient recharging capacity of the plates during the cyclical life of the battery and an adequate recovery of battery capacity even after a deep discharge, with the possibility of being used for batteries based on both flooded battery and VRLA AGM technology.

The invention, as described above and claimed below, has been proposed by way of non-limiting example, with the understanding that it is susceptible to modifications and variations, all falling within the scope of the inventive concept. Therefore, this invention intends to embrace all the modifications and variants falling within the scope of the following claims.

## Claims

1. An additive for electrolyte solutions of lead-acid batteries, usable with batteries based on both flooded battery and VRLA with AGM technology, comprising a composition that includes micro-particles of silicon dioxide (SiO₂), aluminium, alkaline or alkaline earth metal and aqueous solution of sulphuric acid, **characterised in that** said composition comprises from 0.010 mol/L to 0.100 mol/L of SiO₂, and from 0.010 mol/L to 0.100 mol/L of Al³⁺.

2. The additive according to claim 1, **characterised in that** said composition comprises from 0.030 mol/L to 0.100 mol/L of SiO₂, and from 0.015 mol/L to 0.100 mol/L of Al³⁺.

3. The additive according to claim 1, **characterised in that** the alkaline or alkaline earth metal consists of Na₂SO₄ and/or Li₂SO₄.

4. The additive according to claim 3, **characterised in that** the alkaline or alkaline earth metal, Na₂SO₄ and/or Li₂SO₄ is present in a concentration in the range 0.050 mol/L - 0.300 mol/L.

## Patentansprüche

1. Additiv für Elektrolytlösungen von Blei-Säure-Batterien, die sowohl mit Batterien, welche auf gefluteter Batterie wie auch auf VRLA mit AGM-Technologie basieren, verwendbar sind, umfassend eine Zusammensetzung, die Mikropartikel aus Siliziumdioxid (SiO₂), Aluminium, Alkali- oder Erdalkalimetall und wässrige Lösung von Schwefelsäure umfasst, **dadurch gekennzeichnet, dass** die Zusammensetzung 0,010 mol / L bis 0,100 mol / L SiO₂, und 0,010 mol / L bis 0,100 mol / L Al³⁺ umfasst.

2. Additiv nach Anspruch 1, **dadurch gekennzeichnet, dass** die Zusammensetzung 0,030 mol / L bis 0,100 mol / L SiO₂, und 0,015 mol / L bis 0,100 mol / L Al³⁺ umfasst.

3. Additiv nach Anspruch 1, **dadurch gekennzeichnet, dass** das Alkali- oder Erdalkalimetall aus Na₂SO₄ und / oder Li₂SO₄ besteht.

4. Additiv nach Anspruch 3, **dadurch gekennzeichnet, dass** das Alkali- oder Erdalkalimetall, Na₂SO₄ und / oder Li₂SO₄ in einer Konzentration im Bereich von 0,050 mol / L - 0,300 mol / L vorliegt.

## Revendications

1. Additif pour solutions électrolytiques de batteries au plomb-acide, utilisable avec des batteries basées à la fois sur une batterie à électrolyte liquide et VRLA avec technologie AGM, comprenant une composition qui comporte des microparticules de dioxyde de silicium (SiO₂), d'aluminium, de métal alcalin ou alcalino-terreux et une solution aqueuse d'acide sulfurique, **caractérisé en ce que** ladite composition comprend de 0,010 mol/L à 0,100 mol/L de SiO₂ et de 0,010 mol/L à 0,100 mol/L d'Al³⁺.

2. Additif selon la revendication 1, **caractérisé en ce que** ladite composition comprend de 0,030 mol/L à 0,100 mol/L de SiO₂ et de 0,015 mol/L à 0,100 mol/L d'Al³⁺.

3. Additif selon la revendication 1, **caractérisé en ce que** le métal alcalin ou alcalino-terreux est constitué de Na₂SO₄ et/ou de Li₂SO₄.

4. Additif selon la revendication 3, **caractérisé en ce que** le métal alcalin ou alcalino-terreux, Na₂SO₄ et/ou Li₂SO₄ est présent dans une concentration dans la plage de 0,050 mol/L à 0,300 mol/L.
